# EUROPÄISCHE PATENTSCHRIFT

(11) **EP 1 196 231 B1**
(45) Veröffentlichungstag und Bekanntmachung des Hinweises auf die Patenterteilung: **02.01.2003**
(21) Anmeldenummer: 00952951.2
(22) Anmeldetag: 25.07.2000
(51) Int. Cl.: B01D 46/24, B01D 29/21

(54) **FILTERKÖRPER FÜR EINEN FLUIDFILTER, INSBESONDERE FÜR EINEN LUFTFILTER**
FILTER BODY FOR A FLUID FILTER, ESPECIALLY FOR AN AIR FILTER
CORPS DE FILTRE POUR UN FILTRE A FLUIDE, EN PARTICULIER POUR UN FILTRE A AIR

(30) Priorität: 27.07.1999 DE 19935297
(43) Veröffentlichungstag der Anmeldung: 17.04.2002
(73) Patentinhaber: MAHLE Filtersysteme GmbH, 70376 Stuttgart (DE)
(72) Erfinder: GEBLER, Claude, D-70327 Stuttgart (DE); SCHNEIDER, Horst, D-71336 Waiblingen (DE)
(74) Vertreter: Bernhard, Uwe
(86) Internationale Anmeldenummer: DE0002445
(87) Internationale Veröffentlichungsnummer: WO01007146

(56) Entgegenhaltungen:
- WO-A-97/41939
- DE-U- 8 805 049
- FR-A- 1 186 929
- GB-A- 1 499 922

## Beschreibung

Die Erfindung betrifft einen Filterkörper eines Fluidfilters, insbesondere eines Luftfilters, mit den Merkmalen des Oberbegriffs des Anspruches 1. Fluidfilter werden z.B. bei Kraftfahrzeugen als Luftfilter oder Ölfilter oder Kraftstoffilter eingesetzt.

Aus der DE 88 05 049 U ist ein Filterkörper der eingangs genannten Art bekannt, der ein Filterelement aufweist, das aus einem rohrzylindrisch gefaltetem Filtermaterial besteht. Aufgrund dieser Faltung oder Plissierung wird ein derartiges rohrzylindrisches Filterelement auch als Sternfilter bezeichnet. Üblicherweise ist an beiden axialen Enden dieses Filterelements jeweils eine Endscheibe angebracht, die eine radialwirkende Dichtung aufweist. Diese Dichtung kommt bei in ein Filtergehäuse eingesetztem Filterkörper an einer kreiszylindrische Dichtfläche radial zur Anlage. Diese Dichtfläche ist in der Regel an einem bezüglich des Filterkorpers koaxial angeordneten Stutzen des Filtergehäuses ausgebildet, auf den der Filterkörper aufgesteckt ist bzw. der in den Filterkörper eingesteckt ist, wenn wenigstens eine der Endscheiben als zentrisch offene Endscheibe ausgebildet ist.

Da die Dichtungen des Filterkörpers radial wirken, besteht für den Filterkörper grundsätzlich die Möglichkeit einer axialen Verstellung innerhalb des Filtergehäuses. Diese axiale Verstellbarkeit ist beispielsweise zum Ausgleich von toleranzbedingten Maßabweichungen zwischen Filtergehäuse und Filterkörper erforderlich. Aufgrund der axialen Verstellbarkeit sind grundsätzlich auch Relativbewegungen zwischen Filterkörper und Filtergehäuse möglich, die jedoch unerwühscht sind, da dadurch die Dichtungswirkung der Dichtungen beeinträchtigt werden kann und da diese Relativbewegungen außerdem zu einer störenden Geräuschentwicklung beim Betrieb eines damit ausgestatteten Fahrzeuges führen können.

Um derartige Relativbewegungen zwischen Filterkörper und Filtergehäuse zu verhindern, werden Abstützmittel verwendet, die bezüglich des Filterelements auf der- axialen Außenseite der Endscheibe angebracht sind und sich dort ringförmig erstrecken. Diese Abstützmittel sind axial federelastisch ausgebildet und stützen sich bei in das Filtergehäuse eingesetztem Filterkörper an einer Stützkontur ab, die am Filtergehäuse ausgebildet ist und sich parallel zur Endscheibe erstreckt. Durch diese Abstützung erfolgt eine axiale Positionierung des Filterkörpers im Filtergehäuse, die Relativbewegungen zwischen Filterkörper und Filtergehäuse unterdrückt. Derartige Abstützmittel können beispielsweise durch einen an der Endscheibe angebrachten Schaumstoffring ausgebildet sein.

Die Herstellung eines derartigen Filterkörpers ist jedoch relativ aufwendig, da in einem ersten Herstellungsschritt auf der einen Seite der Endscheibe das Filterelement durch eine spezielle Verbindungstechnik, z.B. durch Einplastifizieren mittels Ultraschall oder Heizspiegelerweichung, befestigt wird und in einem zweiten Herstellungsschritt auf der anderen Seite der Endscheibe die Abstützmittel durch eine entsprechende Verbindungstechnik befestigt werden müssen. Darüber hinaus kann noch ein zusätzlicher Herstellungsschritt erforderlich sein, um die Dichtung mit einer geeigneten Verbindungstechnik an der Endscheibe zu befestigen. Eine Vereinfachung ergibt sich, wenn die Abstützmittel in Form eines Ringkragens bereits bei der Ausbildung der Endscheibe in diese integriert werden, so daß ein Verbindungsverfahren zur Befestigung der Abstützmittel eingespart werden kann. Da es sich bei Filterkörpern regelmäßig um Großserienprodukte handelt, bedeutet die Einsparung eines Herstellungsschrittes einen beachtlichen wirtschaftlichen Vorteil.

Die WO 97/41939 zeigt einen Filterkörper, dessen Filterelement an einem axialen Ende mit einer offenen Endscheibe ausgestattet ist. Diese Endscheibe besitzt an ihrem radialen Innenrand einen axialen Ringkragen, der eine radial wirkende Dichtung bildet. Zwischen Ringkragen und Filterelement kann ein Ringkörper eingesetzt sein, der als radiale Unterstützung des Ringkragens dient.

Die GB 1 499 922 zeigt einen Filterkörper, dessen Filterelement an seinen axialen Enden mit Endscheiben ausgestattet ist. An die Endscheiben sind mehrere Dichtlippen angeformt.

Die FR 1 186 929 A zeigt ein ringförmiges Dichtelement, das mit axial abstehenden Dichtlippen ausgestattet ist. Im Einbauzustand werden die Dichtlippen axial aufeinander zu verstellt, wodurch eine Vorspannung erzeugt wird, die eine axiale Dichtwirkung herstellt.

Filterkörper dieser Art sind relativ instabil und können insbesondere keinen allzu großen Druckdifferenzen ausgesetzt werden.

Die vorliegende Erfindung beschäftigt sich mit dem Problem, für einen Filterkörper der eingangs genannten Art eine relativ stabile Ausführungsform auszubilden.

Dieses Problem wird erfindungsgemäß durch einen Filterkörper mit den Merkmalen des Anspruches 1 gelöst.

Durch die erfindungsgemäß vorgeschlagene Innenzarge kann die Stabilität des Filterkörpers beträchtlich gesteigert werden. Denn zum einen kann sich das Filterelement radial innen an der Innenzarge abstützen, wodurch die Stabilität des Filterelements gegenüber radialen Druckdifferenzen erhöht ist. Zum anderen stützen sich die beiden Endscheiben über die Innenzarge axial aneinander ab, so daß axial auf den Filterkörper wirkende Kräfte im wesentlichen nicht auf das Filterelement, sondern vielmehr auf die stabile Innenzarge übertragen werden. Durch die erhöhte Stabilität besitzt der erfindungsgemäße Filterkörper eine vergrößerte Lebensdauer sowie ein breiteres Einsatzspektrum.

Entsprechend einer besonders vorteilhaften Weiterbildung können der die Abstützmittel bildende Ringkragen, die Endscheibe und die Dichtung als einstückig spritzgußgeformte Einheit aus Kunststoff ausgebildet sein, wodurch auch ein Verbindungsvorgang zur Befestigung der Dichtung eingespart werden kann. Die so ausgebildete Endscheibe braucht nur noch mit dem Filterelement und mit der Innenzarge verbunden zu werden, um einen voll funktionsfähigen Filterkörper auszubilden.

Bei einer Weiterbildung kann die Dichtung am Ringkragen ausgebildet sein, wodurch sich ein einfach herstellbarer Aufbau ergibt. Diese Variante kann besonders zweckmäßig fortgebildet werden, indem die Dichtung und der Ringkragen derart zusammenwirken, daß eine zunehmende axiale Verformung des Ringkragens eine zunehmende radiale Verstellung der Dichtung in Richtung deren radialer Dichtungswirkung bewirkt. Dies hat zur Folgen, daß eine axiale Verspannung des Dichtkörpers mit einer Erhöhung der Vorspannung der Dichtung und somit mit einer verbesserten Dichtwirkung einhergeht.

Weitere wichtige Merkmale und Vorteile der vorliegenden Erfindung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert.

Es zeigen, jeweils schematisch,
- Fig. 1: einen Längsschnitt durch einen Filterkörper nach der Erfindung,
- Fig. 2: eine Detailansicht auf einen in Fig. 1 mit II gekennzeichneten Ausschnitt des Filterkörpers in einer ersten Relativlage bezüglich eines Filtergehäuses,
- Fig. 3: eine Ansicht wie in Fig. 2, jedoch in einer anderen Relativlage zum Filtergehäuse,
- Fig. 4: eine Ansicht wie in Fig. 2, jedoch einer anderen Ausführungsform.

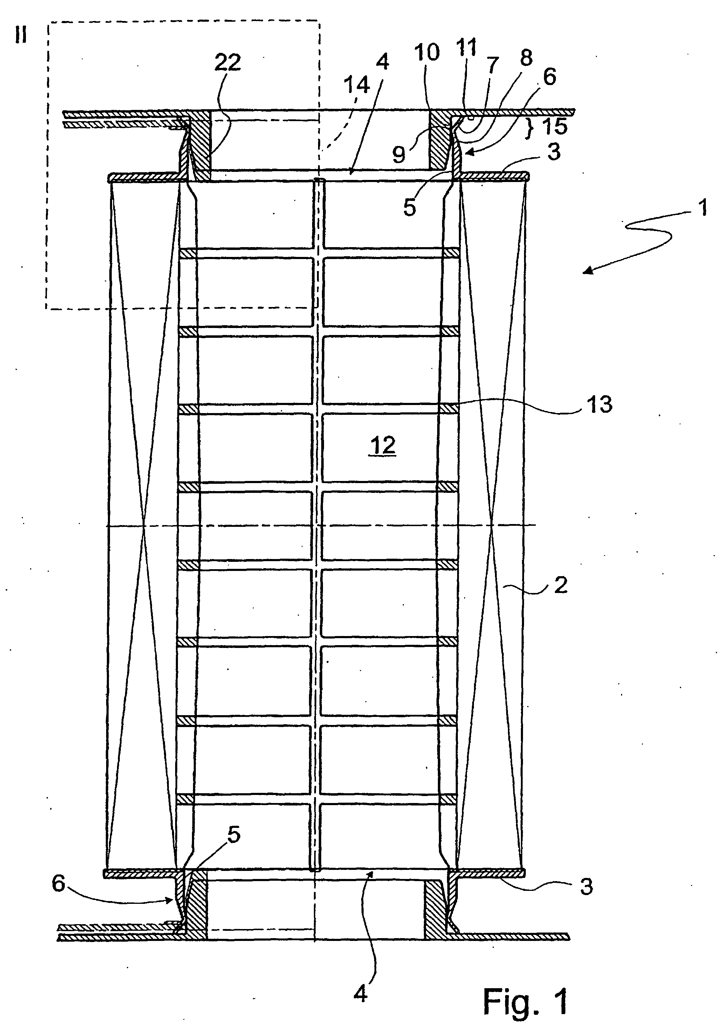

Entsprechend Fig. 1 weist ein erfindungsgemäßer Filterkörper 1 ein Filterelement 2 auf, das durch ein rohrzylindrisch gefaltetes Filtermaterial gebildet ist. An beiden axialen Enden des Filterelements 2 ist jeweils eine Endscheibe 3 angebracht, wobei diese bei der hier dargestellten bevorzugten Ausführungsform identisch ausgebildet sind.

Die Befestigung der Endscheibe 3 am Filterelement 2 erfolgt beispielsweise durch Einplastifizieren mittels Ultraschall oder Heizspiegelerweichung, wobei die dem Filterelement 2 zugewandte Außenseite der Endscheibe 3 aufgeweicht wird. Dadurch kann das Filtermaterial in die Endscheibe 3 eindringen, wobei das insbesondere aus einem Vlies oder Filterpapier bestehende Filtermaterial im Verbindungsbereich von dem verflüssigten Kunststoff der Endscheibe durchdrungen wird. Nach der Verfestigung des Endscheibenkunststoffs ist eine hochfeste Anbindung der Endscheibe 3 an das Filterelement 2 gegeben.

Die Endscheiben 3 sind als offene Endscheiben 3 ausgebildet und weisen zu diesem Zweck jeweils eine zentrische Öffnung 4 auf. An einem Innenrand 5 dieser Öffnung 4 ist an der Endscheibe 3 ein Ringkragen 6 ausgebildet, der bezüglich des Filterelements 2 axial nach außen von der Endscheibe 3 absteht. Der Ringkragen 6 weist zumindest zwei axiale Abschnitte 7 und 8 auf, wobei der näher an der Endscheibe 3 angeordnete Axialabschnitt 8 mit zunehmenden Abstand von der Endscheibe 3 einen abnehmenden Innendurchmesser aufweist, während der Innendurchmesser des von der Endscheibe 3 weiter weg angeordneten Axialabschnitts 7 mit zunehmenden Abstand von der Endscheibe 3 zunimmt. Die beiden Axialabschnitte 7 und 8 sind über einen Verbindungsabschnitt 9 miteinander verbunden, der den kleinsten Innendurchmesser des Ringkragens 6 aufweist und eine radial nach innen wirkende ringförmige dichtlippe bildet.

Diese Dichtlippe 9 dient als radial wirkende Dichtung der Endscheibe 3, die an einer Dichtfläche 10 zur Anlage kommt, wenn der Filterkorper 1 in ein Filtergehäuse eingesetzt ist. Die Dichtfläche 10 ist hier jeweils an einem zylindrischen Stutzen 22 ausgebildet, der einen Bestandteil des im übrigen nicht dargestellten Filtergehäuses bildet und sich koaxial zum Filterkörper 1 erstreckt. Während die Dichtung (Dichtlippe 9) radial an der Dichtfläche 10 anliegt, kommt der axial weiter außen liegende Axial abschnitt 7 des Ringkragens 6 axial an einer Stützkontur 11 zur Anlage, die hier ringscheibenförmig ausgebildet ist und sich parallel zur Endscheibe 3 erstreckt.

In einem Inneren 12 des Filterelements 2 ist eine Innenzarge 13 angeordnet, die zur radialen Abstützung des Filterelements 2 dient. Die Innenzarge 13 ist hier außerdem an den Endscheiben 3 befestigt und dient gleichzeitig zur axialen Abstützung der Endscheiben 3.

Wie aus den Fig. 1 bis 4 hervorgeht, bilden Endscheibe 3, Ringkragen 6 und Dichtung 9 eine Einheit, die vorzugsweise aus Kunststoff einstückig spritzgeformt ist. Der dazu verwendete Kunststoff weist einerseits genügend Steifigkeit auf, um eine Versteifung des Filterelements 2 zu erzielen und weist andererseits Elastizitätseigenschaften auf, die zum einen eine Dichtwirkung und zum anderen eine Federwirkung ermöglichen. Durch die Elastizitätseigenschaften des zur Ausbildung des Ringkragens 6 verwendeten Kunststoffs wird im Bereich der ringförmigen Verbindungszone 9 eine Art Gelenk ausgebildet, das Schwenkverstellungen des axial nach außen daran anschließenden Axialabschnitts 7 ermöglicht, durch die sich der Neigungswinkel dieses Axialabschnitts 7 im Profil gegenüber einer Längsachse 14 des Filterkörpers 1 verändern läßt. Diese Verstellbewegungen sind jedoch aufgrund der Reversibilität des Materials federelastisch, so daß ein von der Endscheibe 3 abgewandter axialer Endabschnitt 15, der in Fig. 1 durch eine geschweifte Klammer symbolisiert ist, axial federelastisch ausgebildet ist.

Wenn der Filterkörper 1 in das zugehörige Filtergehäuse eingesetzt ist, stützt sich dieser axiale Endabschnitt 15 bzw. der axial außenliegende Abschnitt 7 an der Stützkontur 11 ab, wodurch der Filterkörper 1 im Filtergehäuse axial positioniert ist. Da im Ausführungsbeispiel beide Endscheiben 3 mit diesen Abstützmitteln 6, 15 ausgestattet sind, ergibt sich für den Filterkörper 1 eine axiale Zentrierung. Die Abstützmittel 6, 15 verhindern Relativbewegungen des Filterkörpers 1 relativ zum Filtergehäuse, so daß Abnutzungserscheinungen und Geräuschentwicklungen reduziert sind.

Durch die radial wirkende Dichtung 9 an beiden Endscheiben 3 ist der Filterkörper 1 axial beweglich an den Stutzen 22 gelagert. Durch die mit Hilfe der Abstützmittel 6, 15 erzielten Positionierung bzw. Zentrierung des Filterkörpers 1 wird stets eine optimale Relativlage zwischen Filterkörper 1 und Gehäuse gewährleistet.

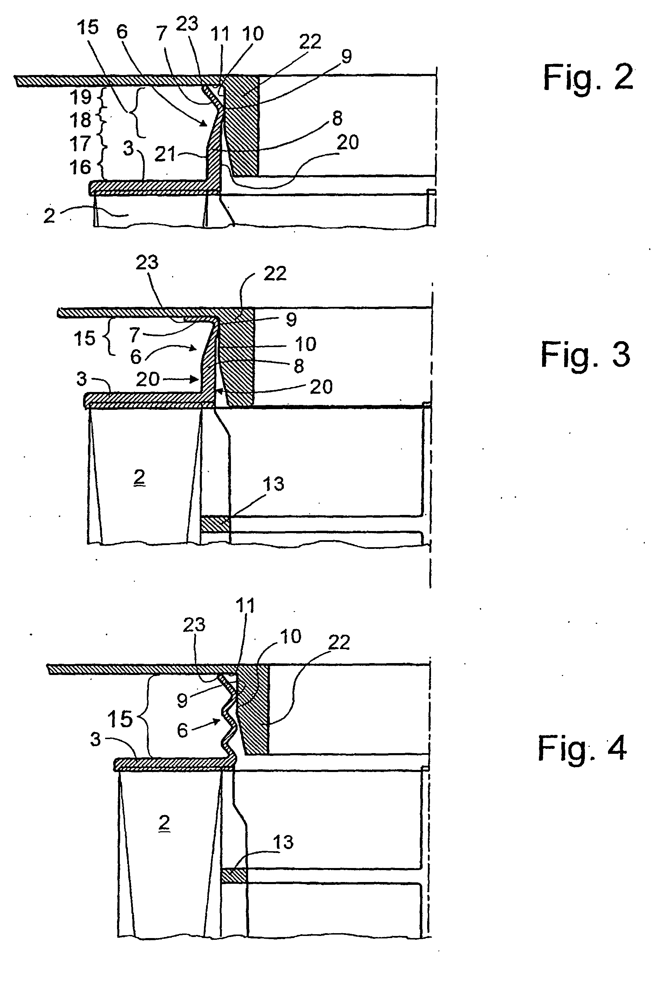

Die Funktionsweise der Abstützmittel (Ringkragen 6 und axialer Abschnitt 15) wird in den Fig. 2 und 3 erläutert.

Entsprechend den Fig. 2 und 3 ist der erfindungsgemäße Filterkörper 1 in einem relativ großen Toleranzbereich hinsichtlich der axialen Erstreckung des Filterkörpers 1 einerseits und des axialen Abstandes der sich im Gehäuse gegenüberliegenden Stützkonturen 11 andererseits voll funktionsfähig. In Fig. 2 weisen die einander gegenüberliegenden. Stützkonturen 11 eine relativ großen Abstand voneinander auf, so daß der federelastische Abschnitt 15 kaum oder nur geringfügig axial verformt wird. Im Unterschied dazu weisen die sich gegenüberliegenden Stützkonturen 11 in Fig. 3 einen relativ kleinen Abstand auf, mit der Folge, das der federelastische Bereich 15 relativ stark federelastisch axial verformt ist.

Zu beachten ist hierbei auch die Profilierung des die Dichtung 9 und die Abstützmittel ausbildenden Ringkragens 6, der an der Endscheibe 3 beginnend mit zunehmenden Abstand von der Endscheibe 3 vier axiale Ringabschnitte aufweist, nämlich einen ersten Ringabschnitt 16, einen zweiten Ringabschnitt 17, einen dritten Ringabschnitt 18 und einen vierten Ringabschnitt 19, die jeweils durch eine geschweifte Klammer gekennzeichnet sind. Im ersten Ringabschnitt 16 ist ein Innendurchmesser 20 sowie ein Außendurchmesser 21 konstant, so daß die Materialstärke des Ringkragens 6 in diesem ersten Ringabschnitt 16 konstant ist. Im zweiten Ringabschnitt 17 bleibt der Innendurchmesser 20 konstant, während der Außendurchmesser 21 mit zunehmenden Abstand von der Endscheibe 3 kontinuierlich abnimmt, so daß sich die Materialstärke hier verringert. Im Dritten Ringabschnitt 18 reduzieren sich sowohl der Innendurchmesser 20 als auch der Außendurchmesser 21 in gleichem Maße, so daß die Materialstärke in diesem Abschnitt 18 im wesentlichen konstant bleibt. Im vierten Abschnitt 19 nehmen dann sowohl der Innendurchmesser 20 als auch der Außendurchmesser 21 mit zunehmendem Abstand von der Endscheibe 3 wieder gleichmäßig zu, so daß auch hier die Materialstärke im wesentlichen konstant bleibt. In dem die Dichtlippe ausbildenden Verbindungsabschnitt 9 liegt folglich der kleinste Innendurchmesser 20 vor, so daß sich eine linienartige Dichtung ergibt.

Wenn sich der Abstand zwischen der Stützkontur 11 und der dieser zugewandten Endscheibe 3 beispielsweise vom Übergang der Relativlage gemäß Fig. 2 zur Relativlage gemäß Fig. 3 reduziert, wird im elastisch verformbaren Axialabschnitt 15 ein mit der Stützkontur 11 in Kontakt stehendes Ende 23 radial nach außen verstellt, wodurch eine radial nach innen wirkende Rückstellkraft im federelastisch verformbaren Abschnitt 15 erzeugt wird. Diese radial nach innen wirkende Rückstellkraft unterstützt die radial nach innen wirkende Dichtung 9, wodurch sich die Dichtwirkung dieser Dichtung 9 verbessert. Außerdem besteht die Dichtung 9 sowie der mit der Stützkontur 11 in Kontakt stehende Axialabschnitt 7 aus demselben Kunststoff, da die Dichtung 9 integral mit dem Ringkragen 6 hergestellt wird, so daß auch an der Stützkontur 11 zusätzlich eine axiale Abdichtung erzielt wird, die mit zunehmender axialer Verspannung des Filterkörpers 1 im Gehäuse ebenfalls zunimmt.

Während in der in den Fig. 1 bis 3 gezeigten Ausführungsform der Ringkragen 6 lediglich einen Axialabschnitt mit im Längsmittelschnitt etwa V-förmigem Profil mit einem zur Dichtfläche hingeneigten Abschnitt 8 und einem von der Dichtfläche 10 weggeneigten Abschnitt 7 aufweist, sind bei der Ausführungsform gemäß Fig. 4 mehrere solcher V-förmiger Abschnitte axial aneinandergereiht, so daß sich insgesamt ein wellenförmiges oder zick-zack-förmiges Profil für den Ringkragen 6 im Längsmittelschnitt ergibt. Der axial nachgiebige Abschnitt 15 erstreckt sich somit über die gesamte axiale Länge des Ringkragens 6. Durch den so nach Art eines Faltenbalgs ausgebildeten Ringkragen 6 kann eine besonders geeignete Federcharakteristik erzielt werden. Außerdem können bei entsprechender Dimensionierung dieses Profils und der Dichtfläche mehrere radial innen liegende ringförmige Wellenberge bzw. Kanten an der Dichtfläche 10 dichtend zur Anlage kommen, so daß mehrere radial wirkende Dichtungen in Reihe geschaltet sind, wodurch die Dichtwirkung gesteigert werden kann.

Auch bei diesen Ausführungsformen bewirkt eine Reduzierung des Abstandes zwischen der Stützkontur 11 und der zugeordneten Endscheibe 3 eine Vergrößerung der Vorspannung der radial innenliegend ausgebildeten Dichtlippe bzw. der Dichtlippen, wobei sich die Dichtwirkung entsprechend verstärkt.

Für die Herstellung der einstückig spritzgußgeformten Einheit aus Endscheibe 3 und Ringkragen 6 sowie insbesondere der Dichtung 9 wird beim erfindungsgemäßen Filterkörper 1 vorzugsweise ein thermoplastisches Elastomer auf Polyesterbasis (TEEE) verwendet; ein solcher Kunststoff ist im Handel unter der Marke Hytrel® erhältlich. Hytrel® ist zumindest bis 90° C stabil, insbesondere reversibel elastisch, so daß mit Endscheiben 3 aus diesem Kunststoff, die einstückig mit der Dichtung 9 ausgestattet sind, Luftfilter und Hydraulikfilter hergestellt werden können. Es ist klar, daß der erfindungsgemäße Filterkörper 1 auch als Kraftstoffilter oder Ölfilter oder dergleichen ausgebildet werden kann, insbesondere wenn ein bei den dort auftretenden Temperaturen stabiler Kunststoff für die Herstellung der Einheit aus Endscheibe 3, Ringkragen 6 und Dichtung 9 verwendet wird.

## Patentansprüche

1. Filterkörper für einen Fluidfilter, insbesondere einen Luftfilter,
**mit folgenden Merkmalen:**
- der Filterkörper (1) weist ein rohrzylindrisches Filterelement (2) aus Filtermaterial auf,
- wenigstens an einem axialen Ende des Filterelements (2) ist eine Endscheibe (3) angebracht,
- die Endscheibe (3) weist eine radial wirkende Dichtung (9) auf, die bei, in ein Filtergehäuse eingesetztem Filterkörper (1) an einer kreiszylindrischen Dichtfläche (10) radial zur Anlage kommt, die bezüglich des Filterkörpers (1) koaxial angeordnet ist,
- die Endscheibe (3) weist Abstützmittel (6, 15) auf, die sich bezüglich des Filterelements (2) auf der axial außenliegenden Seite der Endscheibe (3) ringförmig erstrekken,
- die Abstützmittel (6, 15) sind axial federelastisch ausgebildet und stützen sich bei in das Filtergehäuse eingesetztem Filterkörper (1) an einer am Filtergehäuse ausgebildeten und sich parallel zur Endscheibe (3) erstreckenden Stützkontur (11) ab, wodurch der Filterkörper (1) im Filtergehäuse axial positioniert ist,
- die Abstützmittel weisen eine bezüglich des Filterelements (2) axial nach außen von der Endscheibe (3) abstehenden Ringkragen (6) auf, der in einem axialen Abschnitt (15) axial federelastisch ausgebildet ist,
- bei in das Filtergehäuse eingesetztem Filterkörper (1) stützt sich der federelastische Abschnitt (15) axial an der Stützkontur (11) ab,
- Ringkragen (6) und Endscheibe (3) sind als einstückig spritzgußgeformte Einheit aus kunststoff ausgebildet,
**dadurch gekennzeichnet,**
**daß** der Filterkörper (1) eine Innenzarge (13) aufweist, welche das Filterelement (2) radial und die Endscheibe (3) axial abstützt.

2. Filterkörper nach Anspruch 1,
**dadurch gekennzeichnet,**
**daß** Ringkragen (6), Endscheibe (3) und Dichtung (9) als einstückig spritzgußgeformte Einheit aus Kunststoff ausgebildet sind.

3. Filterkörper nach Anspruch 1 oder 2,
**dadurch gekennzeichnet,**
**daß** die Dichtung (9) am Ringkragen (6) ausgebildet ist.

4. Filterkörper nach Anspruch 3,
**dadurch gekennzeichnet,**
das Dichtung (9) und Ringkragen (6) derart zusammenwirken, daß eine zunehmende axiale Verformung des Ringkragens (6) eine zunehmende radiale Verstellung der Dichtung (9) in Richtung deren radialer Dichtwirkung bewirkt.

5. Filterkörper nach einem der Ansprüche 2 bis 4,
**dadurch gekennzeichnet,**
**daß** die Ringkragen (6) und Dichtung (9) umfassende Einheit aus wenigstens zwei axialen Abschnitten (7, 8) besteht, die über einen Verbindungsabschnitt (9) miteinander verbunden sind, wobei der Verbindungsabschnitt eine radial nach innen wirkende ringförmige Dichtlippe (9) bildet, wobei sich der axial weiter außen angeordnete Axialabschnitt (7) an der Stützkontur (11) abstützt, woder der axial weiter außen angeordnete Axialabschnitt (7) ausgehend von der Dichtlippe (9) von der Dichtfläche (10) weggeneigt ist, während der axial weiter innen angeordnete Axialabschnitt (8) ausgehend von der Dichtlippe (9) zur Dichtfläche (10) hingeneigt verläuft.

6. Filterkörper nach einem der Ansprüche 1 bis 5,
**dadurch gekennzeichnet,**
**daß** der Ringkragen (6) im Längsmittelschnitt ein wellenförmiges oder zick-zack-förmiges Profil aufweist.

7. Filterkörper zumindest nach Anspruch 5,
**dadurch gekennzeichnet,**
**daß** eine im Profil gemessene Materialstärke der Dichtung (9) und Ringkragen (6) umfassenden Einheit mit zunehmenden Abstand von der Endscheibe (3) in dem der Endscheibe (3) zugewandten Axialabschnitt (8) bis zum Verbindungsabschnitt (9) abnimmt und in dem der Endscheibe (3) abgewandten axialen Abschnitt (7) im wesentlichen konstant ist.

8. Filterkörper nach einem der vorhergehenden Ansprüche,
**dadurch gekennzeichnet,**
**daß** die Dichtfläche (10) durch einen zylindrischen Außenmantel eines Stutzens (22) gebildet ist, der so ausgebildet ist, dass er sich im Filtergehäuse koaxial zum Filterkörper (1) erstrecken kann, und daß die Endscheibe (3) eine zentrische Öffnung (4) aufweist, an deren Innenrand (5) der Ringkragen (6) ausgebildet ist.

9. Filterkörper nach einem der vorhergehenden Ansprüche,
**dadurch gekennzeichnet,**
**daß** beide axialen Enden des Filterelementes (2) mit einer dieser Endscheiben (3) ausgestattet sind, wodurch der in das Filtergehäuse eingesetzte Filterkörper (1) im Filtergehäuse axial zentriert ist.

10. Filterkörper nach einem der vorhergehenden Ansprüche,
**dadurch gekennzeichnet,**
**daß** zur Herstellung der Einheit aus Endscheibe (3) und Ringkragen (6) TEEE verwendet wird.

## Claims

1. A filter body of a fluid filter, especially an air filter having the following features:
- the filter body (1) has a tubular cylindrical filter element (2) made of a filter material,
- an end disk (3) is mounted on at least one axial end of the filter element (2),
- the end disk (3) has a seal (9) which acts radially and which comes to rest radially on a cylindrical sealing face (10) in the case of a filter body (1) inserted into a filter housing, said sealing face being arranged coaxially with respect to the filter body (1),
- the end disk (3) has supporting means (6, 15) extending in a ring-shaped design on the outside axially of the end disk (3) with respect to the filter element (2),
- the supporting means (6, 15) are designed with axial elasticity and are supported on a supporting contour (11) which is formed on the filter housing and extends parallel to the end disk (3) in the case of a filter body (1) inserted into the filter housing, so that the filter body (1) is positioned axially in the filter housing,
- the supporting means have an annular collar (6) which projects axially outward away from the end disk (3) with respect to the filter element (2) and is designed with axial elasticity in an axial section (15),
- in the case of a filter body (1) inserted into the filter housing, the elastic section (15) is supported axially on the supporting contour (11),
- annular collar (6) and end disk (3) are made of an injection-molded plastic in one piece,
**characterized in that**
the filter body (1) has an inner frame (13) which supports the filter element (2) radially and supports the end disks (3) axially.

2. A filter body according to claim 1,
**characterized in that**
the annular collar (6), the end disk (3) and the seal (9) are designed as an injection-molded unit made of plastic in one piece.

3. A filter body according to claim 1 or 2,
**characterized in that**
the seal (9) is formed on the annular collar (6).

4. A filter body according to claim 3,
**characterized in that**
the seal (9) and the annular collar (6) work together in such a way that an increasing axial deformation of the annular collar (6) causes an increasing radial adjustment of the seal (9) in the direction of its radial sealing effect.

5. A filter body according to one of claims 2 through 4,
**characterized in that**
the unit comprising the annular collar (6) and the seal (9) consists of at least two axial sections (7, 8) which are joined together by a connecting section (9), where the connecting section forms a ring-shaped sealing lip (9) which acts radially inward, and the axial section (7) arranged at a greater distance away axially is supported on the supporting contour (11), with the axial section (7) which is arranged farther toward the outside axially being inclined away from the sealing face (10), starting from the sealing lip (9), while the axial section (8) which is arranged farther inward axially runs at an inclination toward the sealing face (10), starting from the sealing lip (9) .

6. A filter body according to one of claims 1 through 5,
**characterized in that**
the annular collar (6) has a corrugated or zigzag-shaped profile in a central longitudinal section.

7. A filter body according to at least claim 5,
**characterized in that**
a unit comprising the material thickness of the seal (9) and the annular collar (6), as measured in the profile, decreases in the axial section (8) facing the end disk (3) as far as the connecting section (9) with an increase in the distance from the end disk (3) while being essentially constant in the axial section (7) which faces away from the end disk (3).

8. A filter body according to one of the preceding claims,
**characterized in that**
the sealing face (10) is formed by a cylindrical outer jacket of a connection (22) which extends coaxially with the filter body (1) inside the filter housing, and the end disk (3) has a central opening (4) on whose inside edge (5) the annular collar (6) is provided.

9. A filter body according to one of the preceding claims,
**characterized in that**
the two axial ends of the filter element (2) are each equipped with one of these end disks (3), so that the filter body (1) inserted into the filter housing is centered axially in the filter housing.

10. A filter body according to according to one of the preceding claims,
**characterized in that**
TEEE is used to produce the unit consisting of the end disk (3) and the annular collar (6).

## Revendications

1. Corps de filtre pour un filtre à fluide, en particulier un filtre à air,
**comportant les caractéristiques suivantes :**
- le corps de filtre (1) présente un élément filtrant (2) cylindrique tubulaire en matériau de filtre,
- un disque d'extrémité (3) est monté au moins sur une extrémité axiale de l'élément filtrant (2),
- le disque d'extrémité (3) présente un joint (9) agissant radialement, qui vient radialement en butée, lorsque le corps de filtre (1) est mis en place dans un boîtier de filtre, sur une surface d'étanchéité cylindrique circulaire (10) disposée coaxialement par rapport au corps de filtre (1),
- le disque d'extrémité (3) présente des moyens d'appui (6, 15), qui s'étendent en forme d'anneau, par rapport à l'élément filtrant (2), sur le côté du disque d'extrémité (3) situé axialement à l'extérieur,
- les moyens d'appui (6, 15) sont réalisés avec élasticité axiale et s'appuient, lorsque le corps de filtre (1) est mis en place dans le boîtier de filtre, sur un contour d'appui (11) conformé sur le boîtier de filtre et s'étendant parallèlement au disque d'extrémité (3), le corps de filtre (1) étant de ce fait positionné axialement dans le boîtier de filtre,
- les moyens d'appui présentent un collet annulaire (6) dépassant axialement vers l'extérieur du disque d'extrémité (3) par rapport à l'élément filtrant (2), qui est réalisé avec élasticité axiale dans une section axiale (15),
- lorsque le corps de filtre (1) est mis en place dans le boîtier de filtre, la section élastique (15) s'appuie axialement sur le contour d'appui (11),
- le collet annulaire (6) et le disque d'extrémité (3) sont réalisés sous forme d'unité moulée par injection dune seule pièce en matière plastique,
**caractérisé en ce**
**que** le corps de filtre (1) présente un châssis intérieur (13), qui supporte l'élément filtrant (2) radialement et le disque d'extrémité (3) axialement.

2. Corps de filtre suivant la revendication 1,
**caractérisé en ce**
**que** le collet annulaire (6), le disque d'extrémité (3) et le joint (9) sont réalisés sous forme d'unité moulée par injection dune seule pièce en matière plastique.

3. Corps de filtre suivant l'une des revendications 1 et 2,
**caractérisé en ce**
**que** le joint (9) est réalisé sur le collet annulaire (6) .

4. Corps de filtre suivant la revendication 3,
**caractérisé en ce**
**que** le joint (9) et le collet annulaire (6) coopèrent de telle sorte qu'une déformation axiale croissante du collet annulaire (6) provoque un déplacement radial croissant du joint (9) dans le sens de son effet d'étanchéité radial.

5. Corps de filtre suivant l'une des revendications 2 à 4,
**caractérisé en ce**
**que** l'unité comprenant le collet annulaire (6) et le joint (9) se compose d'au moins deux sections axiales (7, 8), qui sont assemblées entre elles par l'intermédiaire dune section d'assemblage (9), la section d'assemblage formant une lèvre d'étanchéité annulaire (9) qui agit radialement vers l'intérieur, la section axiale (7) disposée plus à l'extérieur axialement s'appuyant sur le contour d'appui (11), la section axiale (7) disposée plus à l'extérieur axialement étant inclinée à l'écart de la surface d'étanchéité (10) à partir de la lèvre d'étanchéité (9), tandis que la section axiale (8) disposée plus à l'intérieur axialement est inclinée en direction de la surface d'étanchéité (10) à partir de la lèvre d'étanchéité (9).

6. Corps de filtre suivant l'une des revendications 1 à 5,
**caractérisé en ce**
**que** le collet annulaire (6) présente un profil de forme ondulée ou en zigzag dans la section centrale longitudinale.

7. Corps de filtre au moins suivant la revendication 5,
**caractérisé en ce**
**qu'**une épaisseur de matériau, mesurée dans le profil, de l'unité comprenant le joint (9) et le collet annulaire (6) diminue avec une distance croissante du disque d'extrémité (3) dans la section axiale (8) tournée vers le disque d'extrémité (3) jusqu'à la section d'assemblage (9) et est essentiellement constante dans la section axiale (7) tournée à l'opposé du disque d'extrémité (3).

8. Corps de filtre suivant l'une des revendications précédentes,
**caractérisé en ce**
**que** la surface d'étanchéité (10) est formée par une enveloppe extérieure cylindrique d'une tubulure (22), qui est réalisée de telle sorte qu'elle peut s'étendre dans le boîtier de filtre coaxialement au corps de filtre (1), et que le disque d'extrémité (3) présente une ouverture centrale (4), sur le bord intérieur (5) de laquelle est réalisé le collet annulaire (6).

9. Corps de filtre suivant l'une des revendications précédentes,
**caractérisé en ce**
**que** les deux extrémités axiales de l'élément filtrant (2) sont équipées de l'un de ces disques d'extrémité (3), le corps de filtre (1) mis en place dans le boîtier de filtre étant de ce fait centré axialement dans le boîtier de filtre.

10. Corps de filtre suivant l'une des revendications précédentes,
**caractérisé en ce**
**que** du TEEE est utilisé pour la fabrication de l'unité composée du disque d'extrémité (3) et du collet annulaire (6).
